# NEUE EUROPÄISCHE PATENTSCHRIFT

(11) **EP 1 584 647 B2**
(45) Veröffentlichungstag und Bekanntmachung des Hinweises auf die Entscheidung über den Einspruch: **26.06.2019**
(45) Hinweis auf die Patenterteilung: 07.09.2016
(21) Anmeldenummer: 05004988.1
(22) Anmeldetag: 08.03.2005
(51) Int. Cl.: C08K 3/00, C08K 5/00, C09C 1/00

(54) **Folienmaterial mit optischen Merkmalen**
Sheet material with optical features
Matériau en feuille ayant des caractéristiques optiques

(30) Priorität: 26.03.2004 AT 5392004
(43) Veröffentlichungstag der Anmeldung: 12.10.2005
(73) Patentinhaber: Hueck Folien Ges.m.b.H, 4342 Baumgartenberg (AT)
(72) Erfinder: Kastner, Friedrich, Dr., 4710 Grieskirchen (AT); Wagner, Eveline, Dipl.-Ing. (FH), 1090 Wien (AT); Müller, Matthias, 92699 Bechtsrieth (DE)
(74) Vertreter: Landgraf, Elvira

(56) Entgegenhaltungen:
- EP-A- 0 984 043
- EP-A- 1 215 233
- WO-A-95/17474
- WO-A-98/19862
- WO-A-03/050574
- WO-A-03/097748
- WO-A-2004/012515
- WO-A1-01/16426
- WO-A1-01/62509
- AU-B2- 488 652
- DE-A1- 19 544 130
- GB-A- 2 386 584
- US-A1- 2003 015 123
- US-B1- 6 475 589
- Online-Auszug aus dem Duden "Element"
- Online-Auszug aus dem Duden "Merkmal"
- Online-Auszug aus dem Duden "Hell"

## Beschreibung

Die Erfindung betrifft ein Folienmaterial mit optischen Merkmalen, beispielsweise optisch variablen Merkmalen und/oder Positiv- oder Negativinformationen und/oder lumineszierenden Merkmalen, Verfahren zu deren Herstellung und deren Verwendung.

Aus der EP 1 114 102 B1 sind optisch variable Pigmente und diese Pigmente enthaltende Beschichtungszusammensetzungen beschrieben. Die Beschichtungszusammensetzungen enthalten Pigmente. Die Pigmente werden hergestellt aus einer Schicht, die mittels physikalischer Dampfabscheidung einer korrosionsresistenten Al- Legierung erzeugt wird. Die Beschichtungszusammensetzungen enthalten zumindest einen filmbildenden Zusatz.

WO 2005/038136 A offenbart ein Sicherheitselement mir einem Farbkippeffekt (also einem optisch variablen Effekt), das gebildet wird durch eine Reflexionsschicht, eine Absorberschicht und eine zwischen diesen beiden Schichten angeordnete Abstandsschicht.

Es handelt sich dabei in erster Linie um ein flächiges Sicherheitselement, das auf einem Trägersubstrat die genannte Schichtenfolge aufweist. Aus dieser Schichtenfolge können nach Entfernen des Trägersubstrats optisch variable Farbpigmente gebildet werden.

EP 1 239 307 A1 offenbart magnetische Dünnschichtinterferenzelement, die neben dem bekannten Dünnschichtaufbau aus Reflexionsschicht, Abstandsschicht und Absorberschicht eine magnetische Schicht aufweist, die von der Abstandsschicht durch eine Reflexionsschicht getrennt ist.

Dieser Schichtaufbau kann ebenfalls zu optisch variablen Pigmenten verarbeitet werden.

Aus EP 0 984 043 A1 und US 5,171, 363 sind ebenfalls optisch variable Pigmente bekannt.

Aufgabe der Erfindung war es, ein Folienmaterial mit optisch variablen Effekten bereitzustellen, das spezifische optisch variable Effekte aufweist und gegebenenfalls auch eine Positiv- und/oder Negativinformation aufweist.

Gegenstand der Erfindung ist daher ein Folienmaterial mit optisch variablen Effekten geeignet zur Herstellung von Sicherheitselementen, dadurch gekennzeichnet, dass das Folienmaterial auf einem Trägersubstrat mindestens eine absorbierende oder diffus streuende partielle Schicht 3, die aus einer schwarzen Druckfarbe, einer aufgedampften Schicht aus unstöchiometrischem Aluminiumoxid oder einer farbigen Schicht besteht, einer in den in der absorbierenden bzw. diffus streuenden Schicht 3 ausgesparten Bereichen aufgebrachten hellen Reflexionsschicht 5 und auf diesen Schichten 3 und 5 mindestens eine vollflächig oder partiell aufgebrachte Schicht 4 mit optisch variablen Pigmenten aufweist.

Weiterbildungen der Erfindung sind in den Unteransprüchen definiert.

Als Trägersubstrat kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC in Frage. Die Trägerfolien weisen vorzugsweise eine Dicke von 5 - 700 µm, bevorzugt 5-200 µm, besonders bevorzugt 5 - 50 µm auf.

Ferner können als Trägersubstrat auch Metallfolien, beispielsweise Al-, Cu-, Sn-, Ni-, Fe- oder Edelstahlfolien mit einer Dicke von 5 - 200 µm, se 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m². verwendet werden.

Ferner können als Trägersubstrate Gewebe und Vliese, wie Endlosfaservliese, Stapelfaservliese und dergleichen, die gegebenenfalls vernadelt oder kalandriert sein können, verwendet werden. Vorzugsweise bestehen solche Gewebe oder Vliese aus Kunststoffen, wie PP, PET, PA, PPS und dergleichen, es können aber auch Vliese aus natürlichen, gegebenenfalls behandelten Fasern, wie Viskosefaservliese eingesetzt werden. Die eingesetzten Vliese weisen ein Flächengewicht von etwa 20 g/m² bis 500 g/m² auf.

Auf das Trägersubstrat kann gegebenenfalls vorerst eine Transferlackschicht aufgebracht sein, die ausgezeichnet in jedem Druckverfahren bedruckbar ist. Dabei kommen sowohl herkömmliche beispielsweise thermoplastische Lacksysteme als auch strahlungs- oder reaktiv vernetzbare Lacksysteme in Frage.
Der thermoplastische Lack, der anschließend stabilisiert wird, besteht aus einer Basis MMA oder Ethylcellulose oder Cycloolefincopolymer, wobei dem Basispolymer zur Einstellung der geforderten thermoplastischen Eigenschaften bzw. zur Einstellung der anschließenden Stabilisierbarkeit Modifikatoren zugesetzt werden.
In Abhängigkeit vom Basispolymer kommen als Modifikatoren beispielsweise Additive zur Einstellung der gewünschten Glastemperatur, des Bereichs in dem sich der Lack in thermoplastischem Zustand befindet, oder Modifikatoren zur Erreichung einer dauerhaften Aushärtung des Lacks in Frage.
Vorzugsweise werden die Komponenten in einem Lösungsmittel, beispielsweise in wässrigen Lösungsmitteln, Wasser, Alkoholen, Ethylacetat, Methylethylketon und dergleichen oder deren Mischungen gelöst.

Einem Lack auf Basis von MMA wird beispielsweise besonders vorteilhaft Nitrocellulose zur Erhöhung der Glastemperatur zugesetzt.
Einem Lack auf der Basis von Cycloolefincopolymeren werden beispielsweise besonders vorteilhaft Polyethylenwachse zugesetzt.
Einem Lack auf Basis von Ethylcellulose werden zur Einstellung der Härtbarkeit handelsübliche Crosslinker zugesetzt.
Die Konzentration des Basispolymeren im fertigen Lack beträgt in Abhängigkeit vom Basispolymer, von den gewünschten Eigenschaften des Lacks und von der Art und Konzentration der Modifikatoren 4 - 50 Gew%.
In einem weiteren Schritt kann dann entweder sofort die Stabilisierung des thermoplastischen Lacks je nach dessen Zusammensetzung durch Vernetzung beispielsweise mittels Strahlungshärtung oder durch thermische Aushärtung durch Temperaturerhöhung erfolgen oder durch Überdrucken mit einer vernetzenden Lackschicht, einer sogenannten Stützlackschicht, die anschließend ausgehärtet wird.
Es ist aber auch möglich vorerst weitere funktionelle oder dekorative Schichten auf die Oberflächenstruktur oder den Lack aufzubringen und erst im Anschluss den thermoplastischen Lack auf oben beschriebene Weise auszuhärten. Ferner ist es auch möglich gegebenenfalls nach Aufbringen einer oder mehrerer weiterer funktioneller Schichten erneut eine Schicht des erfindungsgemäßen Lacks aufzutragen und eine etwaige weitere Oberflächenstruktur auf oben beschriebene Weise abzuformen. Dabei kann beispielsweise eine teilweise Entprägung der ursprünglichen Oberflächenstruktur erfolgen. Es können aber auch in oder auf die weitere erfindungsgemäße vorerst thermoplastische Lackschicht weitere strukturierte und/oder unstrukturierte funktionelle und/oder dekorative Schichten auf- oder eingebracht werden.
Als strahlungshärtbarer, insbesondere UV-härtbarer Lack kann beispielsweise ein strahlungshärtbares Lacksystem auf Basis eines Polyester-, eines Epoxy- oder Polyurethansystems, das dem Fachmann geläufige Photoinitiatoren enthält verwendet werden. Gegebenenfalls kann das Lacksystem auch zwei unterschiedliche Photoinitiatoren enthalten, die bei unterschiedlichen Wellenlängen eine Härtung des Lacksystems in unterschiedlichem Ausmaß initiieren können.

So kann beispielsweise ein Photoinitiator bei einer Wellenlänge von 200 bis 400 nm aktivierbar sein, der zweite Photoinitiator ist dann bei einer Wellenlänge von 370 bis 600 nm aktivierbar. Zwischen den Aktivierungswellenlängen der beiden Photoinitiatoren sollte genügend Differenz eingehalten werden, damit nicht eine zu starke Anregung des zweiten Photoinitiators erfolgt, während der erste Photoinitiator aktiviert wird. Der Bereich, in dem der zweite Photoinitiator angeregt wird, sollte im Transmissionswellenlängenbereich des verwendeten Trägersubstrats liegen. Für die Haupthärtung (Aktivierung des zweiten Photoinitiators) kann auch Elektronenstrahlung verwendet werden.
Als strahlungshärtbarer Lack kann auch ein wasserverdünnbarer Lack verwendet werden. Bevorzugt werden Lacksysteme auf Polyesterbasis.
Das Lacksystem wird transferierbar eingestellt, sodass sich je nach verwendetem Substrat die Aufbringung einer Trennschicht erübrigt.

Die Lacksysteme können gefärbt und/oder pigmentiert sein, wobei alle bekannten und üblichen Pigmente, beispielsweise anorganische und/oder organische Pigmente wie beispielsweise Titandioxid, Zinksulfid, Kaolin, Bariumsulfat, Aluminium-, Chrom- und Siliciumoxide, Metallpigmente (beispielsweise Kupfer, Aluminium, Silber, Gold, Eisen, Chrom und dergleichen), Metalllegierungen, wie Kupfer-Zink oder Kupfer- Aluminium als auch farbige ggf. organische Pigmente, wie Phthalocyaninblau, i-Indolidingelb, Dioxazinviolett, oder auch amorphe oder kristalline keramische Pigmente wie ITO, ATO, FTO und dergleichen oder auch Flüssigkristallpigmente geeignet sind.

Das Trägersubstrat wird in jedem bekannten Beschichtungsverfahren wie beispielsweise durch Aufstreichen, Gießen, Sprühen, Drucken (Siebdruck-, Tiefdruck- Flexodruck, oder Digitaldruckverfahren) oder Walzenauftragsverfahren mit dem Lack beschichtet. Die Beschichtung kann selektiv oder vollflächig erfolgen.
Die Schichtdicke des aufgebrachten erfindungsgemäßen Lacks kann je nach Anforderung an das Endprodukt und Dicke des Substrats variieren und beträgt im allgemeinen zwischen 0,5 und 50 µm, vorzugsweise zwischen 2 und 10 µm, besonders bevorzugt zwischen 2 und 5 µm.

Auf das Trägersubstrat bzw. auf die beschriebene Lackschicht wird eine vollflächige oder partielle absorbierende oder diffus streuende, z.B. eine schwarze oder eine farbige Schicht aufgebracht.
Die partielle Schicht kann dabei in Form von positiven oder negativen Zeichen, Buchstaben, Mustern, Symbolen, geometrischen Formen, Linien und dergleichen aufgebracht werden.
Als absorbierende bzw. diffus streuende Schicht können beispielsweise schwarze Druckfarben oder eine aufgedampfte Schicht aus unstöchiometrischem Aluminiumoxid oder eine farbige Schicht verwendet werden.

Anschließend wird eine Schicht mit optisch variablen Pigmenten aufgebracht. Die Schicht kann dabei vollflächig oder partiell in Form von positiven oder negativen Zeichen, Buchstaben, Mustern, Symbolen, geometrischen Formen, Linien und dergleichen aufgebracht werden.

Geeignete Zusammensetzungen sind dabei Zusammensetzungen, die optisch variable Pigmente, Farbumschlagpigmente und dergleichen enthalten.
Als Bindemittel kommen verschiedene bekannte natürliche oder synthetische Bindemittel in Frage.

Besonders geeignet sind dabei Beschichtungszusammensetzungen, wie sie beispielsweise in der EP 1 114 102 B1 beschrieben sind.

In einer Ausführungsform wird in den in der absorbierenden bzw. diffus streuenden Schicht ausgesparten Bereichen eine helle Reflexionsschicht aufgebracht.
Diese Schicht kann beispielsweise eine opake oder semitransparente weiße Beschichtung oder eine metallische Beschichtung sein.

Wird anschließend eine vollflächige Schicht mit optisch variablen Pigmenten aufgebracht, so erscheint über den absorbierenden bzw. diffus streuenden Bereichen der Farbkippeffekt, in den mit der hellen Reflexionsschicht versehenen Bereichen wird der Farbkippeffekt gemindert oder gelöscht.

In einer weiteren Ausführungsform kann beispielsweise auf einer Seite des Trägersubstrats eine absorbierende oder diffus streuende Schicht mit Aussparungen in Form von Zeichen, Mustern und dergleichen (Negativdruck) aufgebracht werden. Anschließend wird eine vollflächige Beschichtung, die optisch variable Elemente enthält, aufgebracht, worauf wiederum eine partielle absorbierende oder diffus streueunde Schicht passergenau gegengleich zu den Aussparungen der ersten absorbierenden bzw. diffus streuenden Schicht (Positivdruck) aufgebracht, wird. Es wird von beiden Seiten jeweils ein den Aussparungen entsprechender Farbkippeffekt beobachtet.

Gegebenenfalls können diese Schichten auch auf unterschiedlichen Trägermaterialien vorhanden sein, die dann passergenau gegeneinander kaschiert werden können.

Ferner können auf das Trägersubstrat weitere funktionelle und oder dekorative Schichten über oder unter der Schicht mit optisch variablen Merkmalen aufgebracht werden.
Die funktionellen Schichten können beispielsweise bestimmte elektrische, magnetische, chemische, physikalische und auch optische Eigenschaften aufweisen.

Zur Einstellung elektrischer Eigenschaften, beispielsweise Leitfähigkeit können beispielsweise Graphit, Ruß, leitfähige organische oder anorganische Polymere. Metallpigmente (beispielsweise Kupfer, Aluminium, Silber, Gold, Eisen, Chrom und dergleichen), Metalllegierungen wie Kupfer-Zink oder Kupfer- Aluminium oder auch amorphe oder kristalline keramische Pigmente wie ITO und dergleichen zugegeben werden. Weiters können auch dotierte oder nicht dotierte Halbleiter wie beispielsweise Silicium, Germanium oder Ionenleiter wie amorphe oder kristalline Metalloxide oder Metallsulfide als Zusatz verwendet werden. Ferner können zur Einstellung der elektrischen Eigenschaften der Schicht polare oder teilweise polare Verbindungen, wie Tenside oder unpolare Verbindungen wie Silikonadditive oder hygroskopische oder nicht hygroskopische Salze verwendet oder zugesetzt werden. Weiters können auch Schichten aus elektrisch leitfähigen Polymeren aufgebracht werden.

Zur Einstellung der magnetischen Eigenschaften können paramagnetische, diamagnetische und auch ferromagnetische Stoffe, wie Eisen, Nickel und Cobalt oder deren Verbindungen oder Salze (beispielsweise Oxide oder Sulfide) verwendet werden.

Besonders geeignet sind Magnetpigmentfarben mit Pigmenten auf Basis von Fe-oxiden, Eisen, Nickel Cobalt und deren Legierungen, Barium oder Cobaltferrite, hart- und weich magnetische Eisen- und Stahlsorten in wässrigen bzw. lösungsmittelhaltigen Dispersionen. Als Lösungsmittel kommen beispielsweise i-Propanol, Ethylacetat, Methylethylketon, Methoxypropanol und deren Mischungen in Frage.
Vorzugsweise sind die Pigmente in Acrylat- Polymerdispersionen mit einem Molekulargewicht von 150.000 bis 300.000, in Nitrocellulose, Acrylat-Urethan-Dispersionen, Acrylat- Styrol oder PVC-haltigen Dispersionen oder in lösemittelhaltige derartige Dispersionen eingebracht.

Die optischen Eigenschaften der Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, und wärmeempfindliche Farben bzw. Pigmente beeinflussen. Diese sind in allen möglichen Kombinationen einsetzbar. Zusätzlich können auch phosphoreszierende Pigmente allein oder in Kombination mit anderen Farbstoffen und/oder Pigmenten eingesetzt werden.

Es können auch verschiedene Eigenschaften durch Zufügen verschiedener oben genannter Zusätze kombiniert werden. So ist es möglich angefärbte und/oder leitfähige Magnetpigmente zu verwenden. Dabei sind alle genannten leitfähigen Zusätze verwendbar.
Speziell zum Anfärben von Magnetpigmenten lassen sich alle bekannten löslichen und nicht löslichen Farbstoffe bzw. Pigmente verwenden. So kann beispielsweise eine braune Magnetfarbe durch Zugabe von Metallen in ihrem Farbton metallisch, z.B. silbrig eingestellt werden.

Das Trägersubstrat kann auch mit einem Heiß- oder Kaltsiegelkleber oder einer Selbstklebebeschichtung oder einem Kaschierkleber zur Aufbringung auf ein Substrat versehen. Dabei wird das Trägersubstrat bei der Aufbringung abgelöst.

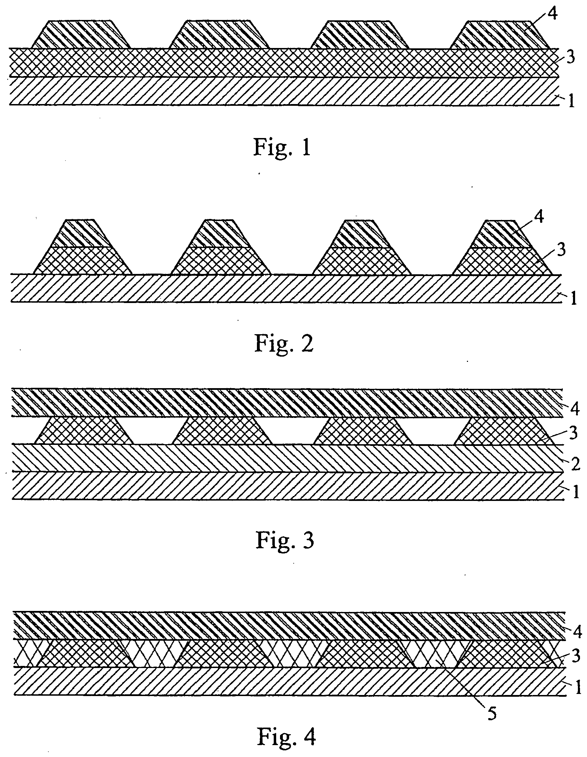

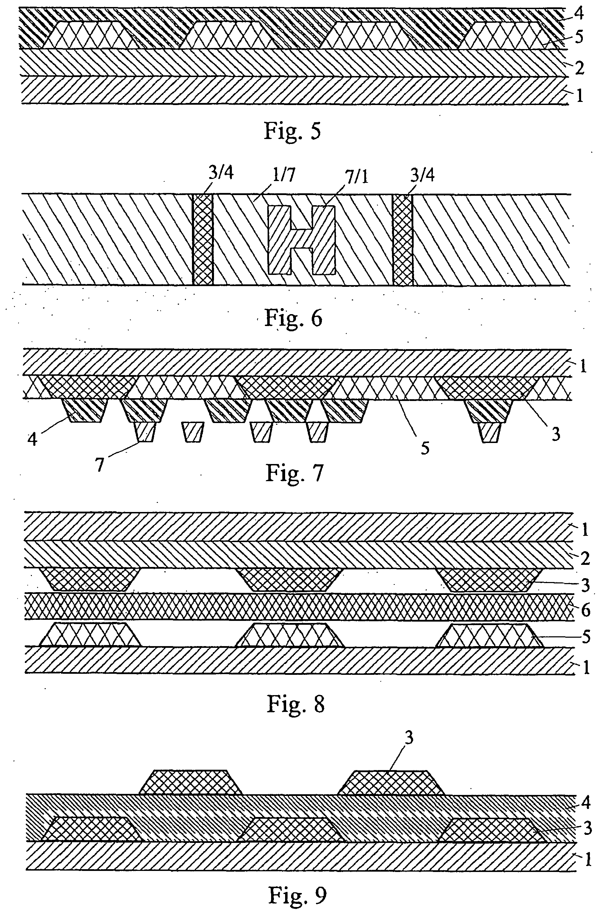

In den Figuren 1 bis 9 sind Folienmaterialien mit optisch variablen Effekten dargestellt, wobei in den Fig 4 und 7 erfindungsgemäße Folienmaterialen dargestellt sind.
Darin bedeuten 1 das Trägermaterial, 2 eine Transferlackschicht, 3 die absorbierende bzw. diffus streueunde Schicht, 4 die Schicht mit optisch variablen Pigmenten, 5 die helle Reflexionsschicht, 6 eine Kaschierkleberschicht, 7 einen Positiv- oder Negativdruck in Form von lumineszierenden Merkmalen.

Das erfindungsgemäße Folienmaterial ist, gegebenenfalls nach entsprechender Konfektionierung daher als Sicherheitsmerkmale in Datenträgern, insbesondere Wertdokumenten wie Ausweisen, Karten, Banknoten oder Etiketten, Siegeln und dergleichen geeignet, aber auch als Verpackungsmaterial beispielsweise in der pharmazeutischen, der Elektronik- und/oder Lebensmittelindustrie, beispielsweise in Form Blisterfolien, Faltschachteln, Abdeckungen, Folienverpackungen und dergleichen geeignet.

Für die Anwendung als Sicherheitsmerkmal werden die Substrate bzw. Folienmaterialien in Streifen oder Fäden oder Patches geschnitten, wobei die Breite der Streifen oder Fäden vorzugsweise 0,05 - 10 mm betragen kann und die Patches vorzugsweise mittlere Breiten bzw. Längen von 2 - 20 mm aufweisen.

Für die Anwendung in oder auf Verpackungen wird das Folienmaterial in Streifen, Bänder, Fäden oder Patches geschnitten, wobei die Breite der der Fäden, Streifen bzw. Bänder vorzugsweise 0,05 - 50 mm beträgt und die Patches vorzugsweise mittlere Breiten und Längen von 0,5 - 200 mm aufweisen.

## Patentansprüche

1. Folienmaterial mit optisch variablen Effekten geeignet zur Herstellung von Sicherheitsmerkmalen in Form von Streifen, Fäden, Bändern oder Patches, **dadurch gekennzeichnet, dass** das Folienmaterial auf einem Trägersubstrat eine absorbierende oder diffus streuende partielle Schicht 3, die aus einer schwarzen Druckfarbe, einer aufgedampften Schicht aus unstöchiometrischem Aluminiumoxid oder einer farbigen Schicht besteht, eine in den in der absorbierenden bzw. diffus streuenden Schicht 3 ausgesparten Bereichen aufgebrachte helle Reflexionsschicht 5 und auf diesen Schichten 3 und 5 mindestens eine vollflächig oder partiell aufgebrachte Schicht 4 mit optisch variablen Pigmenten aufweist.

2. Folienmaterial nach Anspruch 1, **dadurch gekennzeichnet, dass** das Folienmaterial zusätzlich einen Positiv- oder Negativdruck 7 über der Schicht 4 in Form von lumineszierenden Merkmalen aufweist.

3. Folienmaterial nach einem der Ansprüche 1 oder 2, **dadurch gekennzeichnet, dass** das Folienmaterial zusätzliche funktionelle und/oder dekorative Schichten mit optischen und/oder elektrisch leitfähigen und/oder magnetischen Merkmalen aufweist.

4. Folienmaterial nach einem der Ansprüche 1 bis 3, **dadurch gekennzeichnet, dass** das Folienmaterial zusätzlich zwischen dem Trägersubstrat 1 und der diffus streuenden partiellen Schicht 3 eine Transferlackschicht 2 aufweist.

5. Folienmaterial nach Anspruch 4, **dadurch gekennzeichnet, dass** die Transferlackschicht 2 ein vorerst thermoplastischer oder ein strahlungshärtender Lack ist.

6. Folienmaterial nach einem der Ansprüche 4 oder 5, **dadurch gekennzeichnet, dass** das Folienmaterial mit einer Klebebeschichtung zur Übertragung auf ein Substrat versehen ist.

7. Sicherheitsmerkmale für Datenträger, Wertdokumente und dergleichen, hergestellt aus einem Folienmaterial oder einer Transferfolie nach einem der Ansprüche 1 bis 6.

8. Verwendung der Folienmaterialien oder der Transferfolien nach einem der Ansprüche 1 bis 6 zur Herstellung von Sicherheitsmerkmalen.

9. Wertdokumente und Verpackungen enthaltend ein Sicherheitsmerkmal nach Anspruch 7.

## Claims

1. Sheet material with optically variable effects suitable for manufacturing security features in the form of stripes, threads, tapes or patches, **characterized in that** the sheet material on a supporting substrate comprises an absorbing or diffusely scattering partial layer 3 which consists of a black printing ink, a vapor-deposited layer of non-stoichiometric alumina or a colored layer; a bright reflective layer 5 applied in the regions left blank in the absorbing and/or diffusely scattering layer 3; and applied atop these layers 3 and 5 in a full-areal or partial manner at least one layer 4 comprising optically variable pigments.

2. Sheet material according to claim 1, **characterized in that** the sheet material further comprises a positive or negative print 7 above layer 4 in the form of luminescent features.

3. Sheet material according to either of claims 1 and 2, **characterized in that** the sheet material comprises further functional and/or decorative layers comprising optical and/or electrically conductive and/or magnetic features.

4. Sheet material according to any of claims 1 to 3, **characterized in that** the sheet material further comprises a transfer lacquer layer 2 between the supporting substrate 1 and the diffusely scattering partial layer 3.

5. Sheet material according to claim 4, **characterized in that** the transfer lacquer layer 2 is an initially thermoplastic lacquer or a radiatively curing lacquer.

6. Sheet material according to either of claims 4 and 5, **characterized in that** the sheet material is provided an adhesive coating for transfer to a substrate.

7. Security features for data carriers, value documents and the like, obtained from a sheet material or a transfer sheet according to any of claims 1 to 6.

8. Use of sheet materials or transfer sheets according to any of claims 1 to 6 in the manufacture of security features.

9. Value documents and packaging comprising a security feature according to claim 7.

## Revendications

1. Matériau en feuille ayant des effets à variations optiques convenant à la fabrication d'éléments de sécurité sous la forme de rubans, de filaments, de bandes ou de plaques, **caractérisé en ce que** le matériau en feuille présente sur un substrat de support une couche (3) partielle absorbante ou à rayonnement diffus, qui est constituée d'une encre d'impression noire, d'une couche déposée en phase vapeur composée d'un oxyde d'aluminium non stoechiométrique ou d'une couche colorée, d'une couche réfléchissante (5) claire appliquée dans les zones évidées dans la couche (3) absorbante ou à rayonnement diffus, et, sur lesdites couches (3) et (5), au moins une couche (4), appliquée sur toute la surface ou en partie, comprenant des pigments à variations optiques.

2. Matériau en feuille selon la revendication 1, **caractérisé en ce que** le matériau en feuille présente en supplément une impression (7) sur la couche (4) sous la forme de caractères positifs ou négatifs présentant des caractéristiques luminescentes.

3. Matériau en feuille selon l'une quelconque des revendications 1 ou 2, **caractérisé en ce que** le matériau en feuille présente des couches supplémentaires fonctionnelles et/ou décoratives présentant des caractéristiques optiques et/ou électroconductrices et/ou magnétiques.

4. Matériau en feuille selon l'une quelconque des revendications 1 à 3, **caractérisé en ce que** le matériau en feuille présente en supplément entre le substrat de support 1 et la couche (3) partielle à rayonnement diffus une couche de peinture de transfert (2).

5. Matériau en feuille selon la revendication 4, **caractérisé en ce que** la couche de peinture de transfert (2) est une peinture en premier lieu thermoplastique ou durcissant sous l'action de rayons.

6. Matériau en feuille selon l'une quelconque des revendications 4 ou 5, **caractérisé en ce que** le matériau en feuille est pourvu d'un revêtement adhésif destiné à être transmis sur un substrat.

7. Caractéristiques de sécurité pour des supports de données, des documents de valeur et similaires, fabriquées à partir d'un matériau en feuille ou d'une feuille de transfert selon l'une quelconque des revendications 1 à 6.

8. Utilisation des matériaux en feuille ou des feuilles de transfert selon l'une quelconque des revendications 1 à 6 afin de fabriquer des caractéristiques de sécurité.

9. Documents de valeur et emballages contenant une caractéristique de sécurité selon la revendication 7.
